# EUROPEAN PATENT APPLICATION

(11) **EP 4 050 530 A1**
(43) Date of publication of application: **31.08.2022**
(21) Application number: 21159679.6
(22) Date of filing: 26.02.2021
(51) Int. Cl.: G06Q 10/00, G06Q 50/30

(54) **OPERATING A SELF-DRIVING VEHICLE OR A FLEET OF SELF-DRIVING VEHICLES**

(71) Applicant: MOIA GmbH, 10117 Berlin (DE)
(72) Inventor: RAUDSZUS, Dominik, 10437 Berlin (DE); BREITSTADT, Felix, 10407 Berlin (DE); KRISHNAMOORTHY, Venkataraman, 10243 Berlin (DE)
(74) Representative: Hofstetter, Schurack & Partner

(57) **Abstract**

According to a method for operating a self-driving vehicle (1), mission information (9) is received by a mission control unit (3) from a server computer system (5). Driving tasks according to a route are controlled via driving control unit (4) of the self-driving vehicle (1). A set of routines (10) is selected by the mission control unit (3), and at least for a subset of the set of routines (10), at least one vehicle function (11) of the respective routine is triggered by the mission control unit (3) via an interface (6) coupling the mission control unit (3) to at least one function control unit (7a, 7b, 7c).

## Description

The present invention is directed to a method for operating a self-driving vehicle, wherein mission information concerning specifications of a mission to be executed by the self-driving vehicle is received by a mission control unit of the self-driving vehicle from a server computer system and driving tasks required for driving the self-driving vehicle according to a route are controlled by a driving control unit of the self-driving vehicle. The invention is further directed to a method for operating a fleet of self-driving vehicles, to a control system for operating a self-driving vehicle, to a self-driving vehicle, to a computer program and to a computer-readable storage medium.

In a fleet of automated vehicles, also denoted as self-driving vehicles, for mobility-as-a-service applications, such as ride-sharing, ride-pooling or ride-hailing services, or transport-as-a-service applications, a large number of vehicles has to be coordinated by an off-board system, which comprises, for example, a backend server computer system, a fleet control software and a human fleet operator. The off-board system may utilize the vehicles of the fleet to serve passenger trips by assigning mission information, which includes all information needed to serve a passenger trip, to the individual vehicle. Each passenger trip requires a large number of passenger interactions and vehicle functions to be sequentially triggered. Controlling all of these interactions and functions for all the vehicles of the fleet from the off-board system results in demanding requirements to the off-board system as well as to a corresponding communication interface between the off-board system and each vehicle, with regard to latency, uptime, security and safety.

In order to lower these demanding requirements, safety personnel inside the self-driving vehicles may supervise and control a part of the interactions and functions in each vehicle. Alternatively, there may be a continuous interaction between the off-board system and the vehicle.

Document WO 2019/034226 A1 describes a cloud-based system and method for managing vehicle sharing services. To this end, a vehicular system for vehicle sharing services in wireless communication with a cloud-based vehicle sharing management system may be provided. The vehicular system comprises a vehicle control module configured for controlling and commanding instructions to different modules on board the vehicle. An access control module in communication with the vehicle control unit may activate locking or unlocking operations of the vehicle doors.

Document US 2015/0207859 A1 describes a vehicle specific computation management system for cloud computing. Therein, for each task initiated on board of the vehicle that depends on any interaction with the cloud resources, a respective software entity or agent is deployed in the cloud. The agents may generally perform tasks according to three main groups, namely service, supervisory and crowd sourcing.

It is therefore an object of the present invention, to provide an improved concept for operating at least one self-driving vehicle, which reduces the amount of necessary interactions between the vehicle and the off-board system without requiring safety personnel in the self-driving vehicle.

This object is achieved by the respective subject-matter of the independent claims. Further implementations and preferred embodiments are subject-matter of the dependent claims.

The improved concept is based on the idea to distinctively separate the communication between the server computer system and the self-driving vehicle required in order to define a mission to be executed by the self-driving vehicle from further tasks, which are, for example, related to passenger interactions, door control or passenger authentication purposes. Furthermore, said tasks are separated from the driving tasks themselves such as accelerating, decelerating, steering and supervising the environment.

According to the improved concept, a method for operating a self-driving vehicle is provided. Therein, mission information concerning specifications of a mission to be executed by the self-driving vehicle is received, in particular via a communication interface of the self-driving vehicle, by a mission control unit of the self-driving vehicle from a server computer system, in particular from an external server computer system. Driving tasks, in particular all driving tasks, required for driving the self-driving vehicle according to a route are controlled by a driving control unit of the self-driving vehicle, in particular depending on the mission information or depending on routing information received from the server computer system. A set of routines is selected by the mission control unit from a superset of predefined routines depending on the mission information, wherein each routine of the set of routines defines at least one vehicle function. For each routine of at least a subset of the set of routines, the at least one vehicle function of the respective routine is triggered by the mission control unit via an interface of the vehicle, which couples the mission control unit to at least one function control unit of the self-driving vehicle. Each of the at least one triggered vehicle function is carried out by the at least one function control unit.

The self-driving vehicle may for example comprise one or more computing units, which comprise the mission control unit, the driving control unit as well as the interface and the function control units. These may be distributed among different of the computing units of the self-driving vehicle but may also be implemented by one or more shared computing units. In particular, the mission control unit, the driving control unit and the function control units may be considered as respective software units or software modules, respectively, implemented on the respective one or more computing units of the self-driving vehicle.

The route may for example be predetermined and contained in the mission information. Alternatively, the mission information may contain at least two respective waypoints and a routing unit of the self-driving vehicle may determine the route depending on the at least two waypoints. Alternatively, the route and or the waypoints may be transmitted from the server computer system to the self-driving vehicle separately from the mission information as separate routing information. The routing unit may be part of the mission control unit or may be part of the driving control unit or may be a separate unit.

However, the driving control unit and the mission control unit are implemented as separate software and/or hardware units, which are in communication with each other. Analogously, the mission control unit and the at least one function control unit are implemented as separate software and/or hardware units. Also these are in communication with each other, in particular via the interface.

The mission control unit may for example comprise a routine handler module for selecting the set of routines from the superset of predefined routines depending on the mission information. The mission control unit, in particular the routine handler module, may also trigger the routines of the set of routines and in consequence, the at least one vehicle function of the respective routine may be triggered, for example, by a respective routine module of the mission control unit.

In other words, the system structure may be viewed as a three level structure, wherein the highest level is represented by the routine handler module, which is in communication with the external server computer system via the communication interface, the intermediate level is represented by the individual routine modules and the lowest level is represented by the at least one vehicle function. Apart from this three level structure, or in other words parallel to the three level structure, the driving control unit may interact with the mission control unit and/or the at least one function control unit.

The mission information may for example include all information needed for the self-driving vehicle in order to serve a passenger trip. For example, a mission may comprise picking up one or more persons or objects at respective start locations and bringing them to respective destinations, for example according to respective time schedules. Therein, the start locations and destinations may partly be identical and partly be different from each other. A mission may for example also comprise ending the operation of the self-driving vehicle and going back to a hub or charging station. A mission may also comprise starting the operation of the self-driving vehicle, leaving the hub and/or going to a certain geographical location, for example in order to wait for further instructions. The mission information may for example include a stop ID, that is a reference to a stop name and a position in a stop data base stored in the mission control unit. The mission information may also comprise one or more actions, such as picking-up a passenger or object, dropping-off a passenger or object, relocating the self-driving vehicle, returning the self-driving vehicle to the hub and/or emergency scenarios triggered by a teleoperator via the server computer system. The mission information may also comprise respective parameters for the actions. The mission information may also comprise one or more passenger names or other passenger identificators, one or more authentication tokens and one or more passenger preferences.

The mission control unit may therefore execute a mission independent of the server computer system, which may be comprised by a fleet operation backend, which ensures the operability and availability of the self-driving vehicle also in case connectivity with the server computer system is lost.

The mission information may for example be updated and provided by the server computer system to the mission control unit, for example upon assignment of further passenger trips, vehicle states, emergency situations, traffic situation et cetera.

A routine may define a sequence of function calls corresponding to the triggered at least one vehicle function that are necessary to handle the according tasks. The individual routines may for example be independent of each other. In particular, each routine may trigger the corresponding vehicle functions via the interface which are then executed by the at least one corresponding function control unit.

The superset of routines comprises, for example, all routines, which are available in principle at a given time. However, the routines of the superset may be changed or updated, for example via updating information received from the server computer system, for example regularly. The routines of the superset may include regular routines as well as emergency case routines. The set comprises a number of routines, which is equal to or smaller than the total number of routines of the superset. In particular, the set of routines comprises two or more routines.

The actual triggering of the routines and the corresponding vehicle functions may depend on further conditions, such as external or internal events, timing- or location-dependent conditions. Consequently, not necessarily all routines of the set of routines are actually carried out during a mission.

In particular, each of the at least one vehicle function may be carried out by a corresponding function control unit of the at least one function control unit. However, in some implementations, a function control unit may also be able to carry out more than one of the vehicle functions.

The driving control unit, which may also be denoted as self-driving system, SDS, is configured to control a plurality of actuators and sensors of the self-driving vehicle in order to carry out the driving tasks such as steering maneuvers, deceleration maneuvers and/or acceleration maneuvers as well as monitoring tasks and recording the road traffic and other environmental aspects and in order to carry out corresponding reactions automatically.

The mission control unit does not carry out any driving tasks. In other words, the routines and the corresponding vehicle functions do not comprise carrying out driving tasks. In other words, the vehicle functions are non-driving functions. However, there may be interactions or communication between the driving control unit and the mission control unit. For example, a routine may include starting or stopping the driving control unit or the driving control unit may report states or events to the mission control unit.

The interface coupling the mission control unit to the at least one function control unit may comprise a hardware interface and/or software interface, for example an application programming interface, API.

Consequently, according to the improved concept, no communication between the server computer system and the self-driving vehicle is necessary, except for the communication of the mission information and, if applicable, further mission information in order to modify the mission or the like, such as regular status updates regarding routine status sent from the self-driving vehicle, in particular the mission control unit, to the server computer system. Consequently, the amount of data transferred between the server computer system and the self-driving vehicle is reduced and, since the functions associated to the various routines as well as the driving tasks are carried out on-board of the self-driving vehicle automatically, there is, in general, no need for a support of a human fleet operator off-board or safety personnel on-board of the self-driving vehicle.

According to several implementations of the method, at least one condition is determined by the mission control unit for each routine of the set of routines depending on the mission information. The at least one vehicle function of the respective routine is triggered by the mission control unit depending on an actual occurrence of the at least one condition of the respective routine.

In particular, the respective routine and the corresponding at least one vehicle function is triggered only if, for example if and only if, the at least one condition occurs. The at least one condition may for example comprise a temporal condition or a spatial condition, in particular a condition on the location of the self-driving vehicle, external or internal events occurring or further internal conditions or functions being executed. For example, an order of the routines of the set of routines may also be encoded in the at least one condition for the different routines of the set of routines.

Therefore, depending on which of the at least one conditions for the different routines occurs during the mission, all routines of the set of routines are triggered or only a smaller subset of the set of routines is triggered.

It is pointed out that the routines may be executed one after another but may also overlap temporarily.

The superset of routines and the set of routines, respectively, may for example comprise a routine for interaction of the self-driving vehicle with a passenger of the self-driving vehicle, in particular with an actual passenger, a future passenger or a former passenger of the self-driving vehicle. For example, a human-machine-interface of the self-driving vehicle may inform the passenger acoustically, visually and/or haptically about an event or a state of the self-driving vehicle et cetera. The routine for interacting with the passenger may also include receiving an input from the passenger via a human machine interface, for example, authentication information, for example, via a smartphone or another electronic device of the passenger.

According to several implementations, the set of routines comprises a routine for an interaction of the mission control unit with the routing unit and/or for an interaction of the mission control unit with the driving control unit.

For example, the set of routines may comprise a routine for controlling a state of the self-driving vehicle. For example, the set of routines may comprise one or more vehicle functions for preconditioning a motor temperature or a battery temperature of the vehicle, a cabin temperature of the vehicle, controlling an interior lighting of the vehicle et cetera.

The set of routines may also comprise a routine for causing the self-driving vehicle to move to a parking position or a hub or a charging station for charging a battery of the self-driving vehicle.

According to several implementations, further mission information is received by the mission control unit from the server computer system. Driving tasks required for driving the self-driving vehicle according to an adapted route are controlled by the driving control unit.

Therein, the further mission information may encode or define changes to the mission defined by the mission information or represent a new mission. For example, the further mission information may comprise the adapted route. Alternatively, the mission information may contain at least two further waypoints and the routing unit may determine the adapted route depending on the at least two further waypoints.

According to several implementations, the set of routines is adapted by the mission control unit depending on the further mission information.

For example, execution of one or more of the routines of the set of routines may be cancelled and/or conditions for the routine may be adapted according to the further mission information. Also one or more further routines of the superset of routines may be selected for the adapted set of routines.

According to the improved concept, also a method for operating a fleet of self-driving vehicles is provided. For each of the self-driving vehicles of the fleet, mission information concerning specification of a mission to be executed by the respective self-driving vehicle is generated and provided to the respective self-driving vehicle by the server computer system. Each of the self-driving vehicle of the fleet of self-driving vehicle is operated according to a method for operating a self-driving vehicle according to the improved concept.

The fleet of self-driving vehicles may for example correspond to a fleet according to a ride-sharing, ride-pooling or ride-hailing concept or according to a concept for transportation-as-a-service.

In particular, the server computer system may optimize the different missions and the corresponding mission information for the different self-driving vehicles of the fleet on a global level. Afterwards, when the mission information is distributed to the self-driving vehicles of the fleet, they may in general operate without any vital further interaction with the server computer system. Thus, the approach is robust against loss of a communication connection. However, when the communication connection is given, further communication is of course not excluded categorically.

According to the improved concept, also a control system for operating a self-driving vehicle is provided. The control system comprises a mission control unit for the self-driving vehicle, which is configured to receive mission information concerning specifications of a mission to be executed by the self-driving vehicle from a server computer system, in particular via a communication interface of the self-driving vehicle or of the control system. The control system comprises a driving control unit for the self-driving vehicle, which is configured to control driving tasks required for driving the self-driving vehicle according to a route, in particular depending on the mission information or depending on routing information received from the server computer system. The mission control unit is configured to select a set of routines from a superset of predefined routines depending on the mission information, wherein each routine of the set of routines defines at least one vehicle function. The control system comprises an interface for coupling the mission control unit to at least one function control unit of the self-driving vehicle. The mission control unit is configured to trigger, for each routine of at least a subset of the set of routines, the at least one vehicle function of the respective routine via the interface.

In particular, triggering the at least one vehicle function of the respective routine may be considered as triggering the respective routine.

The mission control unit and the driving control unit are, in particular, configured to be installed in the self-driving vehicle.

The self-driving vehicle, in some implementations the control system, may comprise at least one function control unit, configured to carry out the at least one triggered vehicle function.

According to several implementations of the control system, the interface comprises an application programming interface, API.

The control system may for example comprise one or more computing units, which comprise the mission control unit and the driving control unit. In some implementations, the one or more computing units of the control system also comprise the interface and/or the at least one function control unit.

Further implementations of the control system according to the improved concept follow directly from the various implementations of the method for operating a self-driving vehicle according to the improved concept and vice versa.

In particular, a control system according to the improved concept may be configured to carry out a method for operating a self-driving vehicle according to the improved concept or the control system carries out such a method.

According to the improved concept, also a control arrangement for operating a self-driving vehicle is provided, which comprises a control system according to the improved concept and the server computer system configured to provide the mission information.

According to the improved concept, also a self-driving vehicle, in particular a battery electric vehicle, is provided, which comprises a control system according to the improved concept.

The self-driving vehicle may, in particular, be configured to implement a functionality according to level 4 or level 5 of the SAE J3016 classification according to the respective standard of June 2018.

According to the improved concept, also a computer program comprising instructions is provided. When the instructions are executed by a control system according to the improved concept, in particular by the one or more computing units by the control system, the instructions cause the control system to carry out a method according to the improved concept for operating a self-driving vehicle.

According to the improved concept, also a computer-readable storage medium storing a computer program according to the improved concept is provided.

In the following, exemplary implementations of the inventions are described. In the figures:
- Fig. 1: shows schematically a self-driving vehicle and an exemplary implementation of a control arrangement according to the improved concept;
- Fig. 2: shows schematically a mission control unit according to an exemplary implementation of a control system according to the improved concept; and
- Fig. 3: shows schematically a state diagram including a set of routines according to an exemplary implementation of a method for operating a self-driving vehicle according to the improved concept.

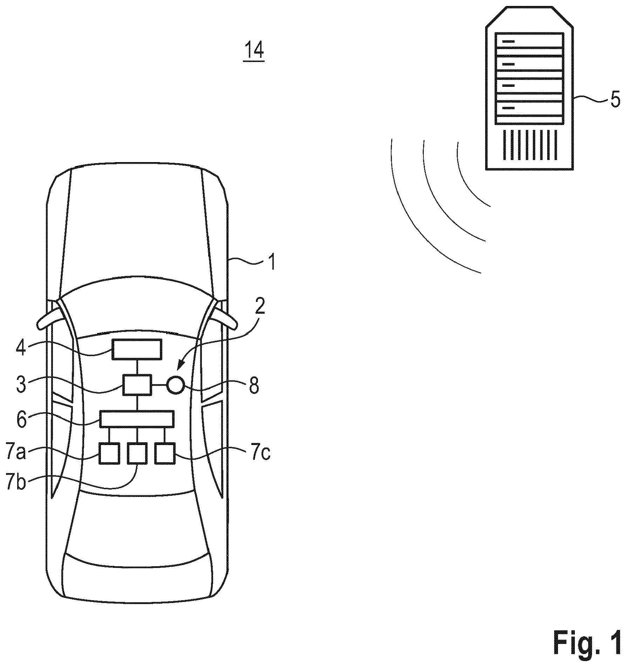

Fig. 1 shows schematically a self-driving vehicle 1 with an exemplary implementation of a control system 2 for operating the self-driving vehicle 1 according to the improved concept. Fig. 1 also shows a server computer system 5 of an off-board control system for managing a fleet of self-driving vehicles, for example for car-sharing or car-hailing applications, the fleet including the self-driving vehicle 1. The control system 2 and the server computer system 5 may for example belong to an exemplary implementation of a control arrangement 14 according to the improved concept. The control arrangement 14 may also comprise further control systems according to the improved concept implemented, for example, in further self-driving vehicles of the fleet. The control system 2 is configured to carry out a method for operating a self-driving vehicle 1 according to the improved concept.

The control system 2 comprises a mission control unit 3 and a driving control unit 4 coupled to the mission control unit 3. The mission control unit 3 and the driving control unit 4 may for example be comprised by one or more computing units of the self-driving vehicle 1. In particular, corresponding software modules representing the mission control unit 3 and the driving control unit 4 may be implemented on the one or more computing units.

The self-driving vehicle 1, in particular the control system 2 may comprise one or more function control units 7a, 7b, 7c, which may be comprised by or implemented on one or more respective electronic control units, ECUs, of the self-driving vehicle 1 or on one or more further computing units of the self-driving vehicle 1. The control system 2 further comprises an interface 6 coupling the mission control unit 3 to the at least one function control unit 7a, 7b, 7c.

Furthermore, the self-driving vehicle 1, in particular the control system 2, may comprise a communication interface 8 for wireless communication of the self-driving vehicle 1, in particular the mission control unit 3, with the server computer system 5.

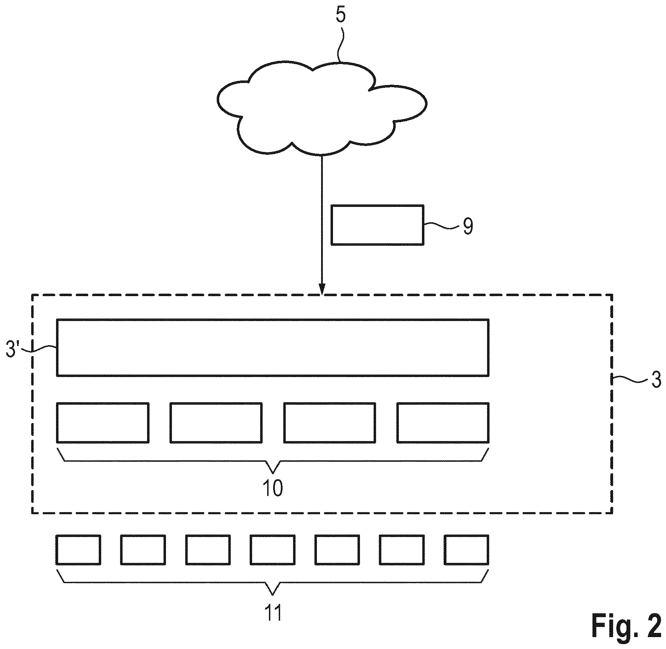

The server computer system 5 may set up a plurality of missions for the various self-driving vehicles of the fleet. Then, the server computer system 5 may transmit corresponding mission information 9 via the communication interface 8 to the mission control unit 3, as depicted schematically in Fig. 2. An optional routing unit (not shown) of the control system 2, which may for example be comprised by the mission control unit 3 or by the driving control unit 4 or may be implemented separately, determines a route for the self-driving vehicle 1 according to the mission depending on the mission information 9. Therein, the mission information 9 may already comprise the route or the routing unit may establish the route based on the mission information. Alternatively, the server computer system 5 may send the route to the driving control unit 4 separately. The functionality of the routing unit may also be implemented in the mission control unit 3 or by the driving control unit 4. The driving control unit 4 is configured to control all required driving tasks for the self-driving vehicle 1 in order to drive the vehicle 1 according to the determined route.

The mission control unit 3 may for example comprise a routine handler module 3', as shown in Fig. 2, which is configured to select a set of routines 10 from a superset of predefined routines depending on the mission information 9. Each of the selected routines 10 defines a corresponding set of vehicle functions 11 that may be executed or carried out by one or more of the function control units 7a, 7b, 7c. The routine handler module 3' may trigger the routines of the selected set of routines 10 according to corresponding conditions or rules, and, consequently, the corresponding vehicle functions 11 of the triggered routine may be triggered via the interface 6.

According to the improved concept, a decentralized approach is followed, wherein the mission control is decomposed into a global mission control, which is located at the off-board system and assigns the missions to the vehicles of the fleet, and an on-board mission control in each of the self-driving vehicles 1, which is implemented in form of the mission control unit 3 and may coordinate all interactions and functions needed to execute the mission in the specific self-driving vehicle 1, except for driving tasks. By these means, the necessary communication between the server computer system 5 and the control system 2 may be limited to the transmission of the mission information 9, for example, destination, passenger name, authentication token, passenger preferences et cetera. Apart from this, routine status updates may be transmitted from the mission control unit 3 to the server computer system 5. All time critical interactions, however, may be handled inside the self-driving vehicle 1 by the mission control unit 3.

Additionally, the software of the mission control unit 3 may be remotely updated over the air directly by the server computer system 5 to roll out and update into new software releases. All communication with the server computer system 5 may be encrypted with a high security standard in order to prevent unauthorized access.

In particular, passenger interactions and vehicle functions are not continuously controlled by a global mission control in the off-board system but are coordinated inside each self-driving vehicle 1 by the respective mission control unit 3. The mission control unit 3 may be considered as a local orchestrator of different vehicle functions including the driving tasks executed by the driving control unit. As mentioned above, the mission control unit 3 itself does not trigger or execute the driving tasks directly but may start or instruct the driving control unit 3. In this way, the amount of data exchange between the server computer system 5 and the self-driving vehicle 1 is reduced to a level that allows monitoring and intervention by a human operator in the off-board control center.

It is achieved that the vehicle functions and interactions that are needed to provide the service to transport a passenger from a starting location to a destination automatically, while an offline service operator is only needed to manage critical cases, also denoted as edge cases, which correspond to situations, in which automated procedures of the control system 2 are blocked due to technical problems, accidents et cetera. Consequently, the improved concept allows to reduce the number of human operators required per vehicle of a fleet of self-driving vehicles, which makes automated mobility as a service solution economically feasible.

Redundancies may be ensured directly at the level of the self-driving vehicle 1 to make sure that any incidents, such as accidents, vehicle emergency situations or passenger interventions, may be handled quickly, intelligently and directly at the self-driving vehicle 1. This also contributes to making the self-driving vehicle 1 safer and ensures that no excess amount of data traffic is generated by the self-driving vehicle 1 in order to communicate with the server computer system 5. While the driving control unit 4 is responsible for the driving tasks, the mission control unit 3 and the respectively selected routines 10 may control additional vehicle functions such as authentication, door control or customer communication via one or more human-machine-interfaces of the self-driving vehicle 1. The coordination of the base vehicle functions and the driving control unit 3 based on the mission information 9 may be handled by the control system 2, in particular the mission control unit 3, according to the improved concept.

From a passenger perspective, this results in a fluent passenger journey starting from a trip request to the billing or receipt at the end of the trip. All granular steps of interaction and actions that occur between these times are defined and the split of work between a smartphone app or another digital front end, the self-driving vehicle 1 and any type of passenger care interaction is defined. Based on the passenger journey, the fleet of vehicles is following a continuous flow resulting in trip executions of a multitude of passengers, of relocations while idling and hub returns.

The mission control unit 3 may coordinate the vehicle functions needed to execute the service journey. The routine handler module 3' may coordinate the routines 10 needed for the mission. A routine may for example be considered as a monitored sequence of elementary vehicle functions 11.

The mission information 9 contains, for example, all relevant information required to execute a passenger trip according to the service journey, including passenger name, destination, authentication token et cetera. A routine contains a sequence of function calls that are required to handle specific situations of the service journey. Selecting, starting and terminating routines that are required to execute the passenger journey given by the mission information may be performed by the routine handler module 3'.

Passenger trips are not necessarily executed in a strict sequential order. Therefore, the order of the stops may also be comprised by the mission information. A mission for a single passenger trip may for example contain two stops corresponding to the start location and the destination of the passenger trip. The mission for two pooled passenger trips then may contain four stops. In such a case, the mission information may for example comprise a first stop ID, a corresponding action, for example pick-up, a corresponding first passenger name of the passenger to be picked up at the stop corresponding to the first stop ID, a corresponding authentication token, corresponding passenger preferences and, for example, a corresponding route to the stop corresponding to the first stop ID. Furthermore, the mission information may comprise a second stop ID, a corresponding action, for example, pick-up, a corresponding second passenger name of the passenger to be picked up at the stop corresponding to the second stop ID, a corresponding further authentication token, corresponding further passenger preferences and a corresponding further route, for example, from the stop of the first stop ID to the stop of the second stop ID. The mission information may comprise a third stop ID, an assignment of the second passenger name to the third stop ID, and a corresponding action, for example, drop-off, and a corresponding route, for example from the stop of the second stop ID to the stop of the third stop ID. Furthermore, the mission information may comprise a fourth stop ID, an assignment of the first passenger name, a corresponding action, for example, drop-off, and a respective route, for example from the stop of the third stop ID to the stop of the fourth stop ID.

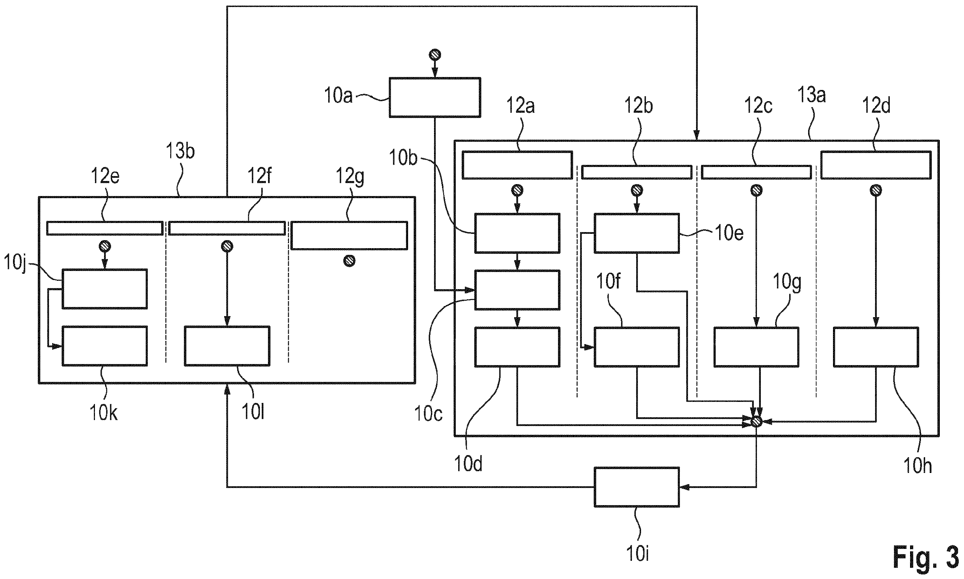

The routine handler module 3' may execute the routines 10 that are needed to execute the mission defined by the mission information 9. To this end, it selects the required routines 10 and starts them depending on defined conditions. In Fig. 3, an exemplary set of routines is depicted in the form of a state diagram. Therein, a first group of routines 13a may correspond to the self-driving vehicle 1 standing still and a second group of routines 13b may correspond to the self-driving vehicle 1 during routing and driving. For example, if a new vehicle is added to the fleet, a routine 10a denoted as "upfitting" may be carried out. The routine 10a may for example include registration steps, vehicle software configuration and/or relevant software updates. Afterwards, for example a routine 10c denoted as "downtime" may be triggered. During the "downtime" routine 10c, the self-driving vehicle 1 may for example be standing still at the hub, for example charging in case of a battery electric vehicle or a hybrid electric vehicle, or being cleaned. If the mission information 9 comprises an action "downtime" 12a, a routine 10b denoted as "prepare downtime" may be carried out, which may for example include stopping the driving control unit 4 and preparing the system for being charged et cetera. Then, the routine 10c "downtime" may be carried out. Afterwards, the routine 10d denoted as "prepare uptime" may be carried out. During this routine 10d, the driving control unit 4 may for example be started, temperatures and other conditions of the self-driving vehicle 1 may be preconditioned and so forth. In case the mission information 9 comprises an action to pick up a passenger "pick-up" 12b, a routine 10e denoted as "authentication" may be carried out. In this routine 10e, for example an authentication token may be requested, respective hardware for reading the authentication token may be activated and/or a door of the vehicle 1 may be opened. Afterwards, for example, a routine 10f denoted as "trip preparation", may be carried out in case the authentication procedure was successful. In this routine 10f, the passenger may for example be informed to fasten seatbelts, the door may be closed et cetera. Then, a routine 10i denoted as "undocking" may be carried out. The routine 10i undocking may also be carried out after routine 10d "prepare uptime" or after routine 10e "authentication", in case the authentication has failed or the passenger has not shown up.

If the mission information 9 comprises an action "drop-off 12c, a routine 10g denoted as "deboarding" may be carried out. In this routine 10g, the door may be opened, the passenger may be sent off et cetera. Afterwards, the routine 10i "undocking" may be carried out. In case the mission information 9 comprises an action "change driver" 12d, a routine 10h denoted as "safety personnel change", may be carried out in case the self-driving vehicle 1 has safety personnel on board. Afterwards, the routine 10i "undocking" may be carried out.

In case the mission information comprises an action "pick-up" 12e, a routine 10j denoted as "waiting" may be carried out. Then a routine 10k denoted as "arriving" may be carried out. In this routine 10k, the self-driving vehicle 1 may for example output defined signals to the passengers in order to allow the passenger to recognize the self-driving vehicle 1. In case the mission information 9 comprises a further action "drop-off" 12f, a routine 10i denoted as "deboarding preparation" may be carried out. Therein, the passenger may for example be informed to leave the vehicle 1 at the upcoming stop. In case the mission information 9 comprises an action "idle" 12g, no particular routine is executed. Therein, the actions 12e, 12f, 12g may be understood as corresponding actions of the mission information 9 for one corresponding stop of the mission. The actions 12a, 12b, 12c, 12d correspond to mission information for standing still.

Furthermore, the described routines may also be executed in parallel and more than one pickup or drop-off at the same stop is possible.

In some implementations, a software of the mission control unit including one or more or all of the routines of the superset of routines may be remotely updated by the server computer system, for example when the vehicle is stationary or in a safe mode or when the vehicle is in the hub. The routines may for example be updated based on operational needs independently from the vehicle software process.

In some implementations, the mission control unit may constantly or continuously or repeatedly update the server computer system of the status of routines and status of vehicle functions executed via routines so that server computer system has a global view of the entire fleet of self-driving vehicles.

In some implementations, the mission control unit may communicates a fault status to the server computer system, for example in case of an internal error of the mission control unit.

### Reference signs

- 1: self-driving vehicle
- 2: control system
- 3: mission control unit
- 3': routine handler module
- 4: driving control unit
- 5: server computer system
- 6: interface
- 7a, 7b, 7c: function control units
- 8: communication interface
- 9: mission information
- 10: routines
- 10a-10l: routines
- 11: vehicle functions
- 12a-12g: actions
- 13a, 13b: groups of routines
- 14: control arrangement

## Claims

1. Method for operating a self-driving vehicle (1), wherein
- mission information (9) concerning specifications of a mission to be executed by the self-driving vehicle (1) is received by a mission control unit (3) of the self-driving vehicle (1) from a server computer system (5);
- driving tasks required for driving the self-driving vehicle (1) according to a route are controlled by a driving control unit (4) of the self-driving vehicle (1);
**characterized in that**
- a set of routines (10) is selected by the mission control unit (3) from a superset of predefined routines depending on the mission information (9), wherein each routine of the set of routines (10) defines at least one vehicle function (11);
- for each routine of at least a subset of the set of routines (10),
- the at least one vehicle function (11) of the respective routine is triggered by the mission control unit (3) via an interface (6) coupling the mission control unit (3) to at least one function control unit (7a, 7b, 7c) of the self-driving vehicle (1); and
- each of the at least one triggered vehicle function (11) is carried out by the at least one function control unit (7a, 7b, 7c).

2. Method according to claim 1,
**characterized in that**
- at least one condition is determined by the mission control unit (3) for each routine of the set of routines (10) depending on the mission information (9);
- the at least one vehicle function (11) of the respective routine is triggered by the mission control unit (3) depending on an actual occurrence of the at least one condition of the respective routine.

3. Method according to one of the preceding claims,
**characterized in that**
- the set of routines (10) comprises a routine for an interaction of the self-driving vehicle (1) with a passenger of the self-driving vehicle (1); and/or
- the set of routines (10) comprises a routine for an interaction of the mission control unit (3) with the driving control unit (4).

4. Method according to one of the preceding claims,
**characterized in that**
- the set of routines (10) comprises a routine for controlling a state of the self-driving vehicle (1); and/or
- the set of routines (10) comprises a routine for causing the self-driving vehicle (1) to move to a parking position;
- the set of routines (10) comprises a routine for causing the self-driving vehicle (1) to move to a charging station for charging a battery of the self-driving vehicle (1).

5. Method according to one of the preceding claims,
**characterized in that**
- further mission information is received by the mission control unit (3) from the server computer system (5);
- driving tasks required for driving the self-driving vehicle (1) according to an adapted route are controlled by the driving control unit (4) depending on the further mission information.

6. Method according to claim 5,
**characterized in that**
the set of routines (10) is adapted by the mission control unit (3) depending on the further mission information (9).

7. Method for operating a fleet of self-driving vehicles (1), wherein for each of the self-driving vehicles (1) of the fleet, mission information (9) concerning specifications of a mission to be executed by the respective self-driving vehicle (1) is generated and provided to the respective self-driving vehicle (1) by a server computer system (5),
**characterized in that**
each of the self-driving vehicles (1) of the fleet is operated according to a method according to one of the preceding claims.

8. Control system (2) for operating a self-driving vehicle (1), the control system (2) comprising
- a mission control unit (3) for the self-driving vehicle (1), which is configured to receive mission information (9) concerning specifications of a mission to be executed by the self-driving vehicle (1) from a server computer system (5); and
- a driving control unit (4) for the self-driving vehicle (1), which is configured to control driving tasks required for driving the self-driving vehicle (1) according to a route;
**characterized in that**
- the mission control unit (3) is configured to select a set of routines (10) from a superset of predefined routines depending on the mission information (9), wherein each routine of the set of routines (10) defines at least one vehicle function (11);
- the control system (2) comprises an interface (6) for coupling the mission control unit (3) to at least one function control unit (7a, 7b, 7c) of the self-driving vehicle (1);
- the mission control unit (3) is configured to trigger, for each routine of at least a subset of the set of routines (10), the at least one vehicle function (11) of the respective routine via the interface (6).

9. Control system (2) according to claim 8,
**characterized in that**
the control system comprises at least one function control unit (7a, 7b, 7c), configured to carry out the at least one triggered vehicle function (11).

10. Control system (2) according to one of claims 8 or 9,
**characterized in that**
the interface (6) comprises an application programming interface.

11. Control arrangement (14) for operating a self-driving vehicle (1), the control arrangement (14) comprising a control system (2) according to one of claims 8 to 10 and server computer system (5) and the server computer system (5) configured to provide the mission information (9).

12. Self-driving vehicle (1) comprising a control system (2) according to one of claims 8 to 10.

13. Self-driving vehicle (1) according to claim 12,
**characterized in that**
the self-driving vehicle (1) is designed as a battery electric vehicle.

14. Computer program comprising instructions, which, when executed by a control system (2) according to one of claims 8 to 10, cause the control system (2) to carry out a method according to one of claims 1 to 6.

15. Computer readable storage medium storing a computer program according to claim 14.
